# EUROPÄISCHE PATENTSCHRIFT

(11) **EP 0 631 717 B1**
(45) Veröffentlichungstag und Bekanntmachung des Hinweises auf die Patenterteilung: **29.04.1998**
(21) Anmeldenummer: 94107897.4
(22) Anmeldetag: 21.05.1994
(51) Int. Cl.: A01F 12/40, A01D 41/12

(54) **Anbauhäcksler mit Breitverteileraustrag für Stroh-/Spreu-Gemisch für/an einem Mähdrescher**
Chopper-attachment for combine, for wide spreading chaff and chopped straw
Accessoire hacheur pour moissonneuse-batteuse à repartir le mélange de balles et de menues pailles

(30) Priorität: 01.07.1993 DE 4321905
(43) Veröffentlichungstag der Anmeldung: 04.01.1995
(73) Patentinhaber: CLAAS Kommanditgesellschaft auf Aktien, 33428 Harsewinkel (DE)
(72) Erfinder: Roberg, Alfons, D-33428 Harsewinkel (DE)

(56) Entgegenhaltungen:
- EP-A- 0 124 628
- EP-A- 0 316 923
- EP-A- 0 331 784
- AU-A- 4 070 568
- DE-A- 1 956 085
- DE-A- 2 837 814
- DE-C- 951 176
- FR-A- 2 075 422
- GB-A- 2 201 075
- US-A- 2 932 145
- US-A- 3 669 123

## Beschreibung

Die Erfindung bezieht sich auf einen Anbauhäcksler mit Breitverteileraustrag für Stroh-/Spreu-Gemisch für/an einem Mähdrescher, mit einem dem Strohhäcksler zugeordneten Wurfgebläse.

Anbauhäcksler für/an Mähdreschern zum Häckseln von Stroh und zur Auftragung und Verteilung von Stroh und Spreu sind in verschiedenen Ausführungen, z.B. aus der DE-PS 36 15 151 und DE-PS 1 071 403 bekanntgeworden.

Hierbei sind die Auswurfstutzen des oder der Gebläse feststehend angeordnet, so daß der Auswurf des Stroh-/Spreu-Gemisches auf einer vorbestimmten Breite erfolgt und dabei durch Seitenwindeinflüsse oder am Hang ein ungleichmäßiges, oft ein unerwünschtes Anhäufeln des Stroh-/Spreu-Gemisches ergebendes Verteilen entsteht.

Aus der EP 0 331 784 ist ein Spleisshäcksler für ein Stroh-/Spreugemisch für oder an Mähdreschern bekannt, der einen untenendig an das Gehäuse des Strohhäckslers angesetzten Übergabetrichter und ein seitlich angebrachtes Wurfgebläse mit feststehendem Auswurfstutzen zeigt. Der gezeigte Spleisshäcksler mit seitlich angebrachtem Wurfgebläse weist den Nachteil auf, daß der Strom an fertig gehäckseltem Stroh zunächst aufgefangen und dann seitlich versetzt werden muß, um dann vom Wurfgebläse erneut beschleunigt und ausgeblasen zu werden. Neben den zusätzlichen Förderelementen, die angetrieben werden müssen, besteht bei einer solchen Vorrichtung die Gefahr des Verstopfens, weil sie nicht die schon recht hohe Wurfkraft in Verbindung mit der Erdanziehungskraft nutzt, um den Weg von der Häckseleinrichtung zum Wurfgebläse zurückzulegen, sondern auf die geringere Kapazität von Förderschnecken angewiesen ist.

Aufgabe der Erfindung ist es, einen nach der eingangs genannten Art aufgebauten Anbauhäcksler in seinem Breitverteileraustrag dahingehend zu verbessern, daß auch bei Seitenwindeinflüssen oder am Hang eine gleichmäßige Breitverteilung erreicht wird und diese Breitverteilung durch einfache und kostengünstige sowie leicht einzurichtende Mittel erfolgt.

Diese Aufgabe wird erfindungsgemäß durch die kennzeichnenden Merkmale des Patentanspruches 1 gelöst. Die sich daran anschließenden Unteransprüche beinhalten Gestaltungsmerkmale, welche vorteilhafte und förderliche Weiterbildungen der Aufgabenlösung darstellen.

Bei dem erfindungsgemäßen Anbauhäcksler mit Breitverteileraustrag ist das Wurfgebläse mit seinem Auswurfstutzen unter dem Strohhäcksler in Seitenrichtung verschwenkbar und in der Schwenkgröße einstellbar gelagert, oder aber das Wurfgebläse fest unter dem Strohhäcksler angeordnet und sein Auswurfstutzen gegenüber dem Gebläse seitenverschwenkbar und einstellbar, wodurch in beiden Ausführungen auch bei Seitenwindeinflüssen oder an Hanglagen ein auf die gewünschten bzw. erforderlichen Breiten gleichmäßig verteilter Auswurf des Stroh-/Spreu-Gemisches erzielt wird.

In vorteilhafter Weise ist an das Gehäuse des Strohhäckslers untenendig ein Trichter angesetzt, über den das gehäckselte Stroh dem Wurfgebläse zugeführt wird. Weiterhin ist es bevorzugt, an das Gehäuse des Strohhäckslers untenendig zwei quer zur Fahrtrichtung des Mähdreschers im Abstand nebeneinander angeordnete Trichter anzusetzen, unter denen Jeweils ein Wurfgebläse seitenverschwenkbar oder feststehend angeordnet ist. Die Seitenverschwenkung des bzw. der Wurfgebläse erfolgt über einen Stellmotor bzw. über einen doppelt wirkenden Niederdruck-Hydraulikzylinder und die Verstellung des bzw. der Auswurfstutzen geschieht ebenfalls über einen Stellmotor und ein Hebelgestänge.

Bei der Ausbildung des Anbauhäckslers mit zwei Wurfgebläsen sind diese in ihrer Seitenverschwenkung durch einen Stellmotor mit Umschlingungstrieb und Kurbelstange sowie eine Koppelstange in der Bewegung verbunden, oder aber zwischen beiden Wurfgebläsen läßt sich der Druckmittelzylinder anordnen.

Die Kurbelstange für die Seitenverschwenkung des einen Wurfgebläses kann in sich längenverstellbar oder aber in veränderbaren Verbindungsstellen am Wurfgebläse angebracht werden, und der Druckmittelzylinder ist ebenfalls in sich längeneinstellbar, so daß die Schwenkwinkelgröße der beiden Wurfgebläse je nach Seitenwindverhältnissen oder Hanglagen vom Fahrerstand aus eingestellt werden kann.

Die beiden Wurfgebläse sind durch je einen Drehkranz unter dem Übergabetrichter leichtgängig seitenverschwenkbar gelagert. Das oder die Wurfgebläse sind in der Schwenkwinkelgröße zu beiden Seiten oder zu einer Seite einstellbar oder aber auch in einer eingestellten Seitenstellung festlegbar.

Weiterhin läßt sich jeder Trichter mit Wurfgebläse zu Reinigungs- und Wartungsarbeiten sowie zum Ankuppeln eines Anhängers an den Mähdrescher entgegen der Fahrtrichtung um eine horizontale Achse am Anbauhäcksler hochschwenkbar lagern.

Auf den Zeichnungen sind Ausführungsbeispiele der Erfindung dargestellt, welche nachfolgend erläutert werden. Es zeigt:
- Fig. 1: eine schematische Rückansicht eines Anbauhäckslers mit zwei untenendigen Übergabetrichtern und darunter seitenverschwenkbar gelagerten, durch einen doppelwirkenden Druckmittelzylinder gekoppelt bewegbaren Wurfgebläsen,
- Fig. 2: eine schematische Draufsicht auf die beiden Wurfgebläse nach Fig. 1 mit Druckmittelzylinder,
- Fig. 3: eine schematische Rückansicht eines Anbauhäckslers mit zwei untenendigen Übergabetrichtern und darunter durch einen Umschlingungstrieb mit Kurbelstange und eine Koppelstange gemeinsam seitenverschwenkbar gelagertes Wurfgebläse,
- Fig. 4: eine schematische Draufsicht auf die Wurfgebläse nach Fig. 3 mit Umschlingungstrieb, Kurbelstange und Koppelstange,
- Fig. 5: eine schematische Rückansicht im Schnitt der durch je einen Drehkranz unter den Übergabetrichtern drehbar gelagerten Wurfgebläse,
- Fig. 6: eine schematische Seitenansicht eines unter einem Häcksler angeordneten feststehenden Wurfgebläses mit seitenverschwenkbarem Auswurfstutzen,
- Fig. 7 und Fig. 8: eine schematische Seitenansicht und Draufsicht eines unter einem Häcksler angeordneten, in zwei Förderkammern für gehäckseltes Stroh und separat zugeführter Spreu aufgeteilten Wurfgebläses mit seitenverschwenkbaren Auswurfstutzen,
- Fig. 9: eine schematische Seitenansicht eines Mähdreschers mit Anbauhäcksler und hochschwenkbarem Trichter und Wurfgebläse.

Der Anbauhäcksler (1) mit Breitverteileraustrag für Stroh-/Spreu-Gemisch für/an einem Mähdrescher (2) besitzt einen Strohäcksler (3), an dessen Gehäuse (4) untenendig ein Übergabetrichter (5) angesetzt, beispielsweise durch Schweißen, Nieten, Schrauben, od. dgl., befestigt ist, unter dem ein Wurfgebläse (6) mit Auswurfstutzen (7) gelagert ist; das Wurfgebläse (6) ist mit seinem Auswurfstutzen (7) gegenüber dem Übergabetrichter (5) als Einheit und/oder der Auswurfstutzen (7) ist gegenüber dem feststehenden Wurfgebläse (6) seitenverschwenkbar ausgeführt.

Das Wurfgebläse (6) läßt sich mit seinem Auswurfstutzen (7) durch einen Stellmotor (8) gegenüber dem Übergabetrichter (5) axial hin- und herverdrehen und dabei in der Seitenverschwenkung (Schwenkwinkel α) seines Auswurfstutzens (7) einstellen.

Der Auswurfstutzen (7) kann in weiterer Ausführung gegenüber dem feststehend unter dem Übergabetrichter (5) gelagerten Wurfgebläse (6) über einen Stellmotor (9) und ein Hebelgestänge (10) in einem einstellbaren Schwenkwinkel (α) hin- und hergeschwenkt werden.

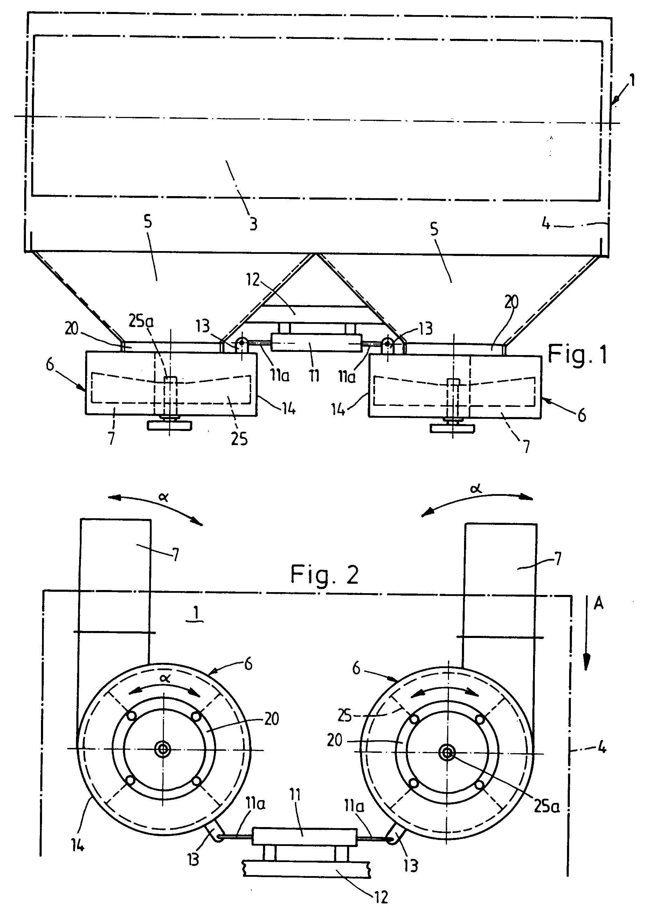

In bevorzugter Weise sind an das Gehäuse (4) des Strohhäckslers (3) untenendig zwei im Abstand nebeneinander quer zur Mähdrescher-Fahrtrichtung (A) angeordnete Übergabetrichtern(5) angesetzt, unter denen jeweils ein Wurfgebläse (6) mit einem Auswurfstutzen (7) gelagert ist (Fig. 1 bis 5).

Diese beiden Wurfgebläse (6) sind in ihrer hin- und hergehenden Schwenkbewegung miteinander gekoppelt und in der Schwenkwinkelgröße einstellbar.

Wie Fig. 1 und 2 zeigt, ist zwischen beiden Wurfgebläsen (6) ein doppelseitig beaufschlagbarer Druckmittelzylinder (11), vorzugsweise Niederdruck-Hydraulikzylinder, angeordnet, der in seiner Hubgröße einstellbar ist und beide Wurfgebläse (6) in der Bewegung verbindet. Der Druckmittelzylinder (11) lagert an einem Tragteil (12) des Strohhäckslers (4) und seine beiden Kolbenstangen (11a) greifen in Gelenkstellen (13) an je einem Wurfgebläsegehäuse (14) an.

Der Hub der beiden Kolbenstangen (11a) ist einstellbar, wodurch die Schwenkwinkelgröße der Wurfgebläse (6) mit ihren Auswurfstutzen (7) bestimmt wird.

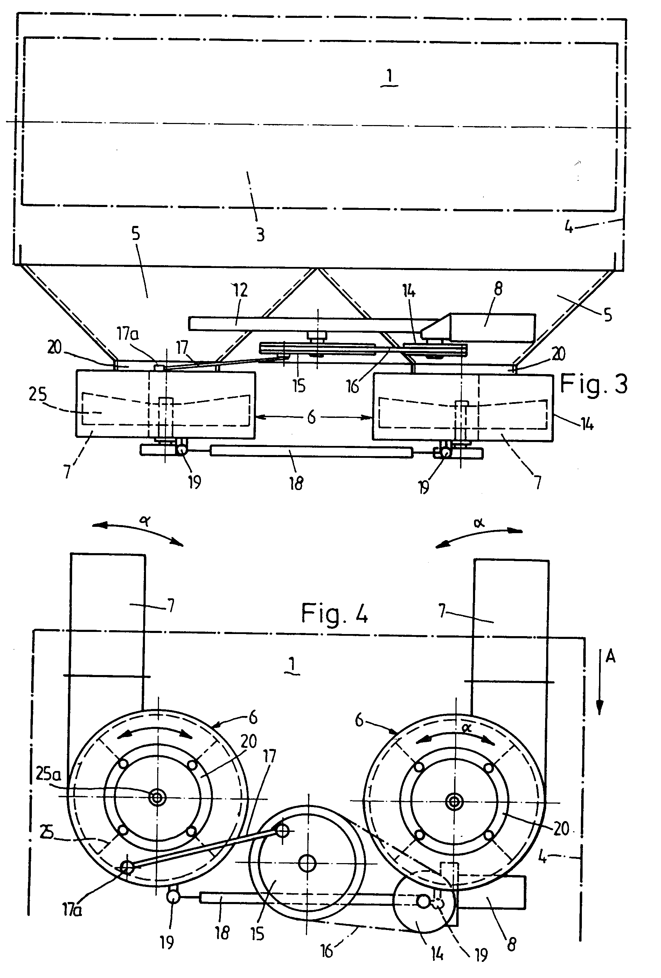

Gemäß der Ausführung nach Fig. 3 und 4 werden die beiden Wurfgebläse (6) von einem Stellmotor (8) über einen über zwei Umlenkräder (14, 15) umlaufenden Umschlingungstrieb (16) - Ketten- oder Riementrieb - angetrieben, dessen eines Umlenkrad (15) über eine Kurbelstange (17) mit einem Wurfgebläse (6) bewegungsmäßig verbunden ist und beide Wurfgebläse (6) über eine Koppelstange (18) miteinander in der Schwenkbewegung gekuppelt sind. Die Koppelstange (18) und die Kurbelstange (17) sind zur Schwenkwinkeleinstellung der beiden Wurfgebläse (6) in sich längenverstellbar und/oder in den gelenkigen Verbindungsstellen (19, 17a) mit den Wurfgebläsen (6) veränderbar; die Koppelstange (18) bzw. Kurbelstange (17) läßt sich z.B. mit ihren endseitigen Steckzapfen in/an eine im Gehäuse (14) auf dem Teilumfang vorgesehene Lochreihe oder Laschenreihe veränderbar einstecken.

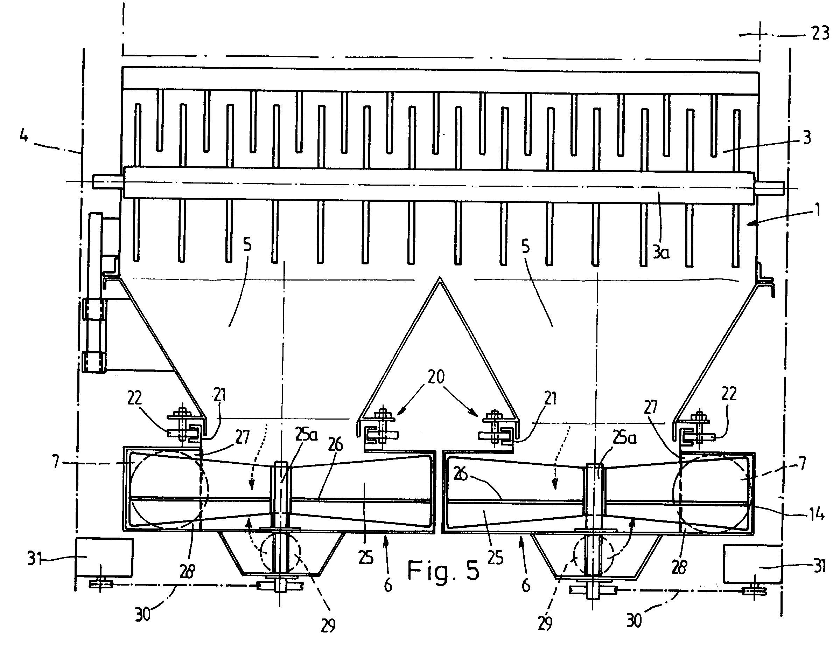

Der Antrieb (8) mit Umschlingungstrieb (14, 15, 16) ist an einem Tragteil (12) des Gehäuses (4) gelagert. Jedes Wurfgebläse (6) ist mittels eines Drehkranzes (20) axial drehbar am Übergabetrichter (5) gelagert; dabei zeigt z.B. das Gehäuse (14) jedes Wurfgebläses (6) ein umlaufendes C-Profil (21), welches über am Trichter (5) drehbar gehaltene Rollen (22) greift (Fig. 5).

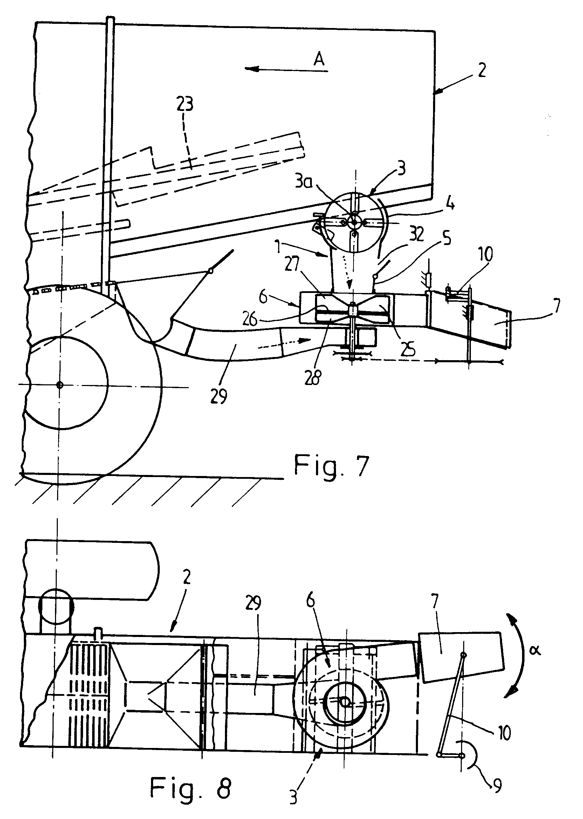

Der Strohhäcksler (3) liegt mit seiner Drehachse (3a) quer zur Mähdrescher-Fahrtrichtung (A) und ist einem Schüttler (23) nachgeschaltet (Fig. 5 und 7).

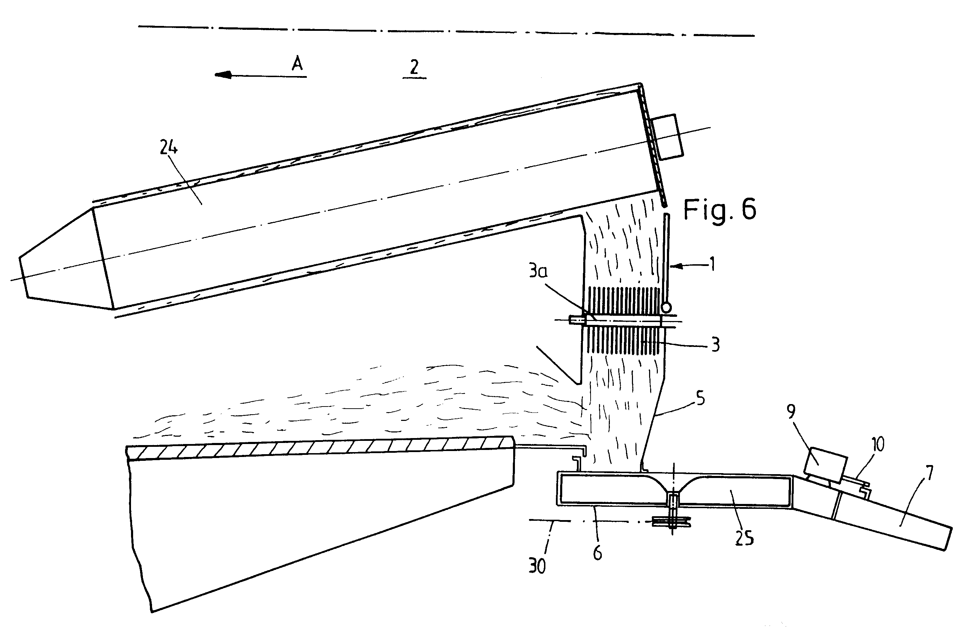

Weiterhin kann der Strohhäcksler (3) mit seiner Drehachse (3a) in Mähdrescher-Fahrtrichtung (A) angeordnet und einer Axial-Trenneinrichtung (24) nachgeschaltet sein, wie Fig. 6 zeigt.

Das Wurfgebläse (6) kann mit der Drehachse (25a) seines Rotors (Gebläseläufer) (25) koaxial zur vertikalen Trichter- und Gebläse-Schwenkachse angeordnet sein (Fig. 1 bis 5). Der Rotor (25) jedes Wurfgebläses (6) wird über seine Drehachse (25a) mittels Umschlingungstrieb (30) von einem am Anbauhäcksler (1) gelagerten Antriebsmotor (31) angetrieben.

Wie aus Fig. 5 und 7 zu entnehmen ist, hat das Wurfgebläse (6) einen durch eine Trennscheibe (26) in zwei übereinander liegende Förderkammern (27, 28) aufgeteilten Rotor (25), dessen oberer Kammer (27) vom Übergabetrichter (5) das gehäckselte Stroh und dessen unterer Kammer (28) über eine Ansaugleitung (29) die Spreu vom Siebkasten zugeführt wird.

Der Anbauhäcksler (1) kann dabei einen oder zwei Trichter (5) haben; bei zwei angesetzten Trichtern (5) sind auch zwei Ansaugleitungen (29) - für jedes Wurfgebläse (6) eine separate Leitung (29) - vorgesehen.

Der oder die Übergabetrichter (5) läßt (lassen) sich mit einer zusätzlichen, einstellbaren Nebenluftöffnung (32) - Fig. 7 - ausstatten, wodurch die Luftmenge für den Auswurf des Stroh-/Spreu-Gemisches durch das Gebläse (6) reguliert werden kann.

Die Stellmotore (8, 9) und der Druckmittelzylinder (11) sind vom Fahrer des Mähdreschers vom Fahrerstand aus einstellbar.

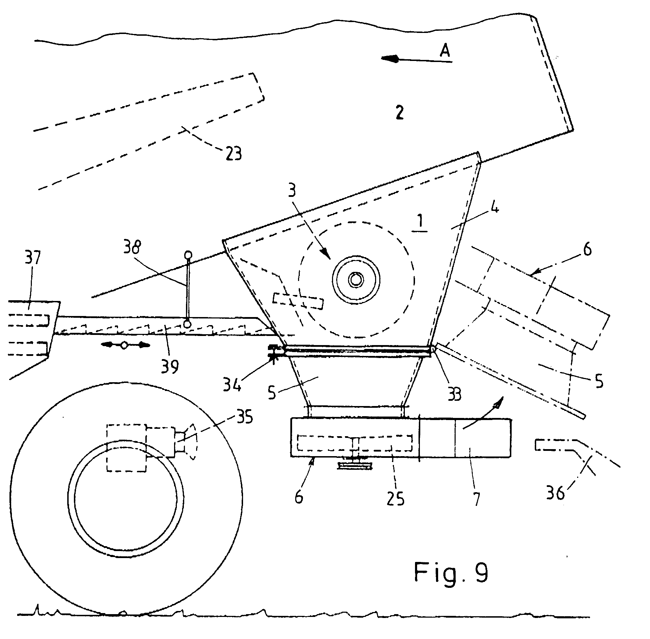

Gemäß der weiteren Ausführung des Anbauhäckslers (1) nach Fig. 9 ist der Übergabetrichter (5) mit Wurfgebläse (6) am Häckslergehäuse (4) durch eine horizontale Achse (33) und einen Verschluß (34) gehalten und gegenüber dem Häckslergehäuse (4) entgegen der Fahrtrichtung (A) hochschwenkbar vorgesehen.

Für Reinigungs- und Wartungsarbeiten wird der Verschluß (34) geöffnet und dann kann der Trichter (5) mit Wurfgebläse (6) um die in Fahrtrichtung (A) hintenliegende Achse (33) in die in strichpunktierten Linien dargestellte Stellung hochgeschwenkt werden, so daß das Häckslergehäuse (4) und der Trichter (5) von unten gut zugänglich sind und unter dem Häckslergehäuse (4) ein Freiraum zum Ankuppeln eines Anhängers an den Mähdrescher (2) geschaffen worden ist.

Mit (35) ist eine Anhängerkupplung und mit (36) eine Deichsel des Anhängers bezeichnet.

Zwischen Siebkasten (37) und Strohhäcksler (3) ist ein an Pendelstangen (38) aufgehängter, in und entgegen der Fahrtrichtung (A) bewegbarer Eingabeboden (39) angeordnet, der die Spreu vom Siebkasten (37) aufnimmt und in den Häcksler (3) einbringt.

Bei schmalen Mähdreschern hat der Häcksler (1) nur einen Übergabetrichter (5) mit einem Wurfgebläse (6) und bei breiten Mähdreschern wird der Häcksler (1) mit zwei Übergabetrichtern (5) und Wurfgebläsen (6) ausgerüstet.

## Patentansprüche

1. Anbauhäcksler mit Breitverteileraustrag für Stroh-/Spreu-Gemisch für/an einem Mähdrescher, mit einem untenendig an das Gehäuse des Strohhäckslers (1) angesetztem Übergabetrichter (5) und einem Wurfgebläse (6) mit Auswurfstutzen (7),
**dadurch gekennzeichnet,**
daß das Wurfgebläse (6) mit Auswurfstutzen (7) unterhalb des Übergabetrichters (5) angeordnet und das Wurfgebläse (6) mit seinem Auswurfstutzen (7) gegenüber dem Übergabetrichter (5) und/oder der Auswurfstutzen (7) gegenüber dem Wurfgebläse (6) seitenverschwenkbar ist.

2. Anbauhäcksler nach Anspruch 1, dadurch gekennzeichnet, daß das Wurfgebläse (6) mit seinem Auswurfstutzen (7) durch einen Stellmotor (8) gegenüber dem Übergabetrichter (5) axial hin- und herverdrehbar und dabei in der Seitenverschwenkung (Schwenkwinkel α) seines Auswurfstutzens (7) einstellbar ist.

3. Anbauhäcksler nach Anspruch 1, dadurch gekennzeichnet, daß der Auswurfstutzen (7) feststehend gegenüber dem unter dem Übergabetrichter (5) gelagerten Wurfgebläse (6) über einen Stellmotor (9) und ein Hebelgestänge (10) in einem einstellbaren Schwenkwinkel (α) hin- und herschwenkbar ist.

4. Anbauhäcksler nach Anspruch 1, dadurch gekennzeichnet, daß an das Gehäuse (4) des Strohhäckslers (3) untenendig zwei im Abstand nebeneinander quer zur Mähdrescher-Fahrtrichtung (A) angeordnete Übergabetrichter (5) angesetzt sind, unter denen jeweils ein Wurfgebläse(6) mit einem Auswurfstutzen (7) gelagert ist.

5. Anbauhäcksler nach Anspruch 4, dadurch gekennzeichnet, daß die beiden Wurfgebläse (6) in der hin- und hergehenden Schwenkbewegung miteinander gekoppelt und in der Schwenkwinkelgröße einstellbar sind.

6. Anbauhäcksler nach Anspruch 5, dadurch gekennzeichnet, daß zwischen beiden Wurfgebläsen (6) ein doppelseitig beaufschlagbarer Druckmittelzylinder (11), vorzugsweise Hydraulikzylinder, angeordnet ist, der in seiner Hubgröße einstellbar ist.

7. Anbauhäcksler nach Anspruch 5, dadurch gekennzeichnet, daß die beiden Wurfgebläse (6) durch einen von einem Stellmotor (8) angetriebenen, über zwei Umlenkräder (14, 15) umlaufenden Umschlingungstrieb (16) - Ketten- oder Riementrieb - axial verdrehbar sind, dessen eines Umlenkrad (15) über eine Kurbelstange (17) mit einem Wurfgebläse (6) bewegungsmäßig verbunden ist und beide Wurfgebläse (6) über eine Koppelstange (18) miteinander in der Schwenkbewegung gekuppelt sind, wobei die Koppelstange (18) und die Kurbelstange (17) zur Schwenkwinkeleinstellung der beiden Wurfgebläse (6) in sich längenverstellbar und/oder in den gelenkigen Verbindungsstellen (19, 17a) mit den Wurfgebläsen (6) veränderbar ist.

8. Anbauhäcksler nach einem der Ansprüche 1 bis 7, dadurch gekennzeichnet, daß jedes Wurfgebläse (6) mittels eines Drehkranzes (20) axial drehbar am Übergabetrichter (5) gelagert ist.

9. Anbauhäcksler nach einem der Ansprüche 1 bis 8, dadurch gekennzeichnet, daß der Drehkranz (20) von einem am Wurfgebläsegehäuse (14) umlaufend angeordneten C-Profil (21) und mehreren am Trichter (5) drehbar gelagerten, vom C-Profil (21) übergriffenen Rollen (22) gebildet ist.

10. Anbauhäcksler nach einem der Ansprüche 1 bis 9, dadurch gekennzeichnet, daß der Häcksler (3) mit seiner Drehachse (3a) quer zur Mähdrescher-Fahrtrichtung (A) liegt und einem Schüttler (23) nachgeschaltet ist.

11. Anbauhäcksler nach einem der Ansprüche 1 bis 9, dadurch gekennzeichnet, daß der Häcksler (3) mit seiner Drehachse (3a) in Mähdrescher-Fahrtrichtung (A) liegt und einer Axial-Trenneinrichtung (24) nachgeschaltet ist.

12. Anbauhäcksler nach einem der Ansprüche 1 bis 11, dadurch gekennzeichnet, daß das Wurfgebläse (6) einen koaxial zur vertikalen Trichter-Gebläse-Schwenkachse drehbaren Rotor (25) hat.

13. Anbauhäcksler nach einem der Ansprüche 1 bis 12, dadurch gekennzeichnet, daß das Wurfgebläse (6) einen durch eine Trennscheibe (26) in zwei übereinander liegende Förderkammern (27, 28) aufgeteilten Rotor (25) aufweist, dessen oberer Kammer (27) vom Übergabetrichter (5) das gehäckselte Stroh und dessen unterer Kammer (28) über eine Ansaugleitung (29) die Spreu vom Siebkasten zugeführt wird.

14. Anbauhäcksler nach einem der Ansprüche 1 bis 13, dadurch gekennzeichnet, daß der Übergabetrichter (5) mit Wurfgebläse (6) am Häckslergehäuse (4) um eine horizontale Achse (33) entgegen der Mähdrescher-Fahrtrichtung (A) hochschwenkbar gelagert ist.

15. Anbauhäcksler nach Anspruch 14, dadurch gekennzeichnet, daß die Schwenkachse (33) des Übergabetrichters (5) in Fahrtrichtung (A) hinten liegt und der Trichter (5) mittels dieser Schwenkachse (33) und einem Verschluß (34) in der Arbeitsstellung am Häckslergehäuse (4) gehalten ist.

## Claims

1. A mounted-type chopping apparatus with width distribution discharge for a straw/chaff mixture for/on a combine harvester, having a transfer hopper (5) fitted at the lower end to the housing of the straw chopping apparatus (1) and a casting blower (6) with ejection connection (7) characterised in that the casting blower (6) with ejection connection (7) is arranged beneath the transfer hopper (5) and the casting blower (6) with its ejection connection (7) is laterally pivotable relative to the transfer hopper (5) and/or the ejection connection (7) is laterally pivotable with respect to the casting blower (6).

2. A mounted-type chopping apparatus according to claim 1 characterised in that the casting blower (6) with its ejection connection (7) can be axially reciprocally rotated relative to the transfer hopper (5) by a control motor (8) and in that case is adjustable in the lateral pivotal movement (pivot angle α) of its ejection connection (7).

3. A mounted-type chopping apparatus according to claim 1 characterised in that the ejection connection (7) is reciprocally pivotable in stationary relationship with respect to the casting blower (6) which is mounted under the transfer hopper (5), through an adjustable pivot angle (α) by way of a control motor (9) and a lever linkage (10).

4. A mounted-type chopping apparatus according to claim 1 characterised in that fitted to the housing (4) of the straw chopping apparatus (3) at the lower end are two transfer hoppers (5) which are arranged at a spacing in side-by-side relationship transversely to the direction of travel (A) of the combine harvester and beneath each of which is mounted a respective casting blower (6) with an ejection connection (7).

5. A mounted-type chopping apparatus according to claim 4 characterised in that the two casting blowers (6) are coupled together in the reciprocal pivotal movement and are adjustable in respect of the magnitude of the angle of pivotal movement.

6. A mounted-type chopping apparatus according to claim 5 characterised in that arranged between the two casting blowers (6) is a double-acting pressure fluid cylinder (11), preferably a hydraulic cylinder, which is of an adjustable stroke magnitude.

7. A mounted-type chopping apparatus according to claim 5 characterised in that the two casting blowers (6) are axially rotatable by a drive (16) involving a wrap-around drive member circulating in a loop configuration - a chain or belt drive - which is driven by a control motor (8) and which circulates around two direction-changing wheels (14, 15), one direction-changing wheel (15) being connected for movement to the casting blower (6) by way of a crank bar (17), and the two casting blowers (6) are coupled together for pivotal movement by way of a coupling bar (18), wherein for pivotal angle adjustment of the two casting blowers (6) the coupling bar (18) and the crank bar (17) are in themselves adjustable in respect of length and/or variable in the pivotal connection locations (19, 17a) to the casting blowers (6).

8. A mounted-type chopping apparatus according to one of claims 1 to 7 characterised in that each casting blower (6) is mounted axially rotatably on the transfer hopper (5) by means of a turntable (20).

9. A mounted-type chopping apparatus according to one of claims 1 to 8 characterised in that the turntable (20) is formed by a C-shaped member (21) arranged on the casting blower housing (14) and extending therearound, and a plurality of rollers (22) which are rotatably mounted on the hopper (5) and over which the C-shaped member (21) engages.

10. A mounted-type chopping apparatus according to one of claims 1 to 9 characterised in that the chopping apparatus (3) is disposed with its axis of rotation (3a) transversely with respect to the direction of travel (A) of the combine harvester and is connected downstream of a straw walker (23).

11. A mounted-type chopping apparatus according to one of claims 1 to 9 characterised in that the chopping apparatus (3) is disposed with its axis of rotation (3a) in the direction of travel (A) of the combine harvester and is disposed downstream of an axial separating apparatus (24).

12. A mounted-type chopping apparatus according to one of claims 1 to 11 characterised in that the casting blower (6) has a rotor (25) which is rotatable coaxially with respect to the vertical hopper blower pivot axis.

13. A mounted-type chopping apparatus according to one of claims 1 to 12 characterised in that the casting blower (6) has a rotor (25) which is divided by a separating plate (26) into two mutually superposed conveyor chambers (27, 28) and to whose upper chamber (27) the chopped straw is fed by the transfer hopper (5) and to whose lower chamber (28) the chaff is fed from the sieve box by way of a suction intake line (29).

14. A mounted-type chopping apparatus according to one of claims 1 to 13 characterised in that the transfer hopper (5) with casting blower (6) is mounted on the chopping apparatus housing (4) in such a way as to be pivotable upwardly about a horizontal axis (33) in opposite relationship to the direction of travel (A) of the combine harvester.

15. A mounted-type chopping apparatus according to claim 14 characterised in that the pivot axis (33) of the transfer hopper (5) is disposed at the rear in the direction of travel (A) and the hopper (5) is held to the chopping apparatus housing (14) by means of said pivot axis (33) and a closure means (34) in the working position.

## Revendications

1. Hache-paille porté à dispersion large pour un mélange paille/balle pour/sur une moissonneuse-batteuse, comportant une trémie de déversement (5) montée sur le carter du hache-paille (1) a l'extrémité inférieure de celui-ci et une soufflante de dispersion (6) munie d'un conduit d'éjection (7), caractérisé par le fait que la soufflante de dispersion (6) avec le conduit d'éjection (7) est disposée au-dessous de la trémie de déversement (5) et que la soufflante de dispersion (6) avec son conduit d'éjection (7) peut pivoter latéralement par rapport a la trémie de déversement (5) et/ou le conduit d'éjection (7) peut pivoter latéralement par rapport a la soufflante de dispersion (6).

2. Hache-paille porté selon la revendication 1, caractérisé par le fait que la soufflante de dispersion (6) avec son conduit d'éjection (7) petit être entraînée en rotation axialement avec un mouvement de va-et-vient par rapport a la trémie de déversement (5) par un moteur de commande (8) et que la rotation latérale (angle de pivotement α) de son conduit d'éjection (7) peut être réglée.

3. Hache-paille porté selon la revendication 1, caractérisé par le fait que le conduit d'éjection (7) fixe par rapport a la soufflante de dispersion (6) montée au-dessous de la trémie de déversement (5) peut déplacé avec un mouvement de va-et-vient avec un angle de pivotement (α) réglable par un moteur de commande (9) et un système de leviers (10).

4. Hache-paille porté selon la revendication 1, caractérisé par le fait que deux trémies de déversement (5) disposées transversalement à la direction de déplacement (A) de la moissonneuse-batteuse, au-dessous de chacune desquelles est montée une soufflante de dispersion (6) avec un conduit d'éjection (7), sont montées côte a côte a distance l'une de l'autre a l'extrémité inférieure du carter (4) du hache-paille (3).

5. Hache-paille porté selon la revendication 4, caractérisé par le fait que les deux soufflantes de dispersion (6) sont couplées l'une a l'autre du point de vue du mouvement de pivotement alternatif et que la valeur de l'angle de pivotement est réglable.

6. Hache-paille porté selon la revendication 5, caractérisé par le fait qu'un vérin a fluide de pression (11) à double action, de préférence un vérin hydraulique dont la course est réglable, est disposé entre les deux soufflantes de dispersion (6).

7. Hache-paille porté selon la revendication 5, caractérisé par le fait que les deux soufflantes de dispersion (6) sont entraînées en rotation axiale par un système d'entraînement a enroulement (16) - système à chaîne ou a courroie - entraîné par un moteur de commande (8), dans lequel une roue de renvoi (15) est liée cinématiquement a une soufflante de dispersion (6) par l'intermédiaire d'une bielle (17) et les deux soufflantes de dispersion (6) sont couplées l'une a l'autre en rotation par l'intermédiaire d'une tige de couplage (18), la tige de couplage (18) et la bielle (17) étant réglables en longueur et/ou au niveau de leurs articulation (19, 17a) sur les soufflantes de dispersion (6) aux fins de régler l'angle de pivotement des deux soufflantes de dispersion (6).

8. Hache-paille porté selon une des revendications 1 à 7, caractérisé par le fait que chaque soufflante de dispersion (6) est montée tournante axialement sur la trémie de déversement (5) au moyen d'une couronne de pivotement (20).

9. Hache-paille porté selon une des revendications 1 à 8, caractérisé par le fait que la couronne de pivotement (20) est formée d'un profilé en C (21) circulaire disposé sur le carter de soufflante de dispersion (14) et de plusieurs galets (22) qui sont montés tournants sur la trémie (5) et sont entourés par le profilé en C (21).

10. Hache-paille porté selon une des revendications 1 à 9, caractérisé par le fait que le hache-paille (3) est disposé avec son axe de rotation (3a) transversalement a la direction de déplacement (A) de la moissonneuse-batteuse et est placé derrière un secoueur (23).

11. Hache-paille porté selon une des revendications 1 à 9, caractérisé par le fait que le hache-paille (3) est disposé avec son axe de rotation (3a) dans la direction de déplacement (A) de la moissonneuse-batteuse et est placé derrière un dispositif de séparation (24) axial.

12. Hache-paille porté selon une des revendications 1 à 11, caractérisé par le fait que la soufflante de dispersion (6) comporte un rotor (25) qui tourne autour de l'axe vertical de pivotement trémie-soufflante.

13. Hache-paille porté selon une des revendications 1 à 12, caractérisé par le fait que la soufflante de dispersion (6) comporte un rotor (25) qui est divisé en deux chambres (27, 28) superposées par un disque de séparation (26), rotor dont la chambre supérieure (27) reçoit la paille hachée arrivant de la trémie de déversement (5) et dont la chambre inférieure (28) reçoit la balle amenée depuis le caisson de nettoyage par une conduite d'aspiration (29).

14. Hache-paille porté selon une des revendications 1 à 13, caractérisé par le fait que la trémie de déversement (5) avec la soufflante de dispersion (6) est montée sur le carter de hache-paille (4) avec possibilité de relevage autour d'un axe (33) horizontal dans la direction opposée a la direction de déplacement (A) de la moissonneuse-batteuse.

15. Hache-paille porté selon la revendication 14, caractérisé par le fait que l'axe de pivotement (33) de la trémie de déversement (5), vu dans la direction de déplacement (A), est situé derrière et que la trémie (5) est maintenue dans la position de travail sur le carter de hache-paille (4) à l'aide dudit axe de pivotement (33) et d'un verrou (34).
